# EUROPEAN PATENT SPECIFICATION

(11) **EP 0 509 746 B1**
(45) Date of publication and mention of the grant of the patent: **14.07.1999**
(21) Application number: 92303321.1
(22) Date of filing: 14.04.1992
(51) Int. Cl.: G06F 13/24

(54) **Interruption circuit for use with a central processing unit**
Unterbrechungsschaltung für den Gebrauch mit einer zentralen Verarbeitungseinheit
Circuit d'interruption pour une unité centrale de traitement

(30) Priority: 15.04.1991 JP 10989291
(43) Date of publication of application: 21.10.1992
(73) Proprietor: NEC CORPORATION, Tokyo (JP)
(72) Inventor: Murai, Masao, Tokyo 108-01 (JP)
(74) Representative: Abnett, Richard Charles

(56) References cited:
- DE-A- 3 238 826
- US-A- 3 434 111
- US-A- 4 275 458
- MICROPROCESSORS AND MICROSYSTEMS vol. 10, no. 5, June 1986, LONDON GB pages 258 - 267 CLEMENTS 'EXCEPTION HANDLING IN THE 68000, PART 2'

## Description

### BACKGROUND OF THE INVENTION:

This invention relates to an interruption circuit for use in combination with a central processing unit in interrupting operation of the central processing unit when the central processing unit receives an interruption signal from one of a multiplicity of interruption generating units or interruption sources and when the central processing unit identifies that one of the interruption generating units.

For use in combination with such an interruption circuit, each interruption generating unit is for generating an interruption signal upon occurrence of an interruption requesting phenomenon which is herein called an interruption request. The interruption circuit comprises a scanning arrangement between the central processing unit and the multiplicity of interruption generating units for scanning the interruption generating units to specify one of the interruption generating units at a time as a particular unit. The scanning arrangement supplies the interruption signal generated by the particular unit to the central processing unit as a particular signal.

In a previously proposed interruption circuit which will later be described more in detail, the scanning arrangement also supplies the central processing unit with an identification signal which identifies the particular active unit. The scanning arrangement includes a number of buffers which hold the address of the interruption generating unit being specified by the scanning arrangement at a given moment. On receiving an interruption signal, the control processing unit interrogates the buffers to determine the address of the unit generating the input.

When a central processing unit interrogates a number of buffers it must first signal to all of the buffers which one it wishes to interrogate, and then allow this particular buffer to transmit its data. Each buffer read operation therefore involves an address cycle followed by a data cycle. This need for successive address and data cycles means that the buffer interrogation is a lengthy operation. The delay associated with such buffer interrogation is even greater where (as is the case in US 4,791,553) the interruption circuit includes a hierarchical arrangement of scan circuits and associated data buffers. Large numbers of interruption generating units are divided into groups with each group having an associated unit scan circuit and buffer for scanning the unit within the group, with the unit scan circuit having one or more group scan circuit(s) and associated buffer(s) for scanning the groups.

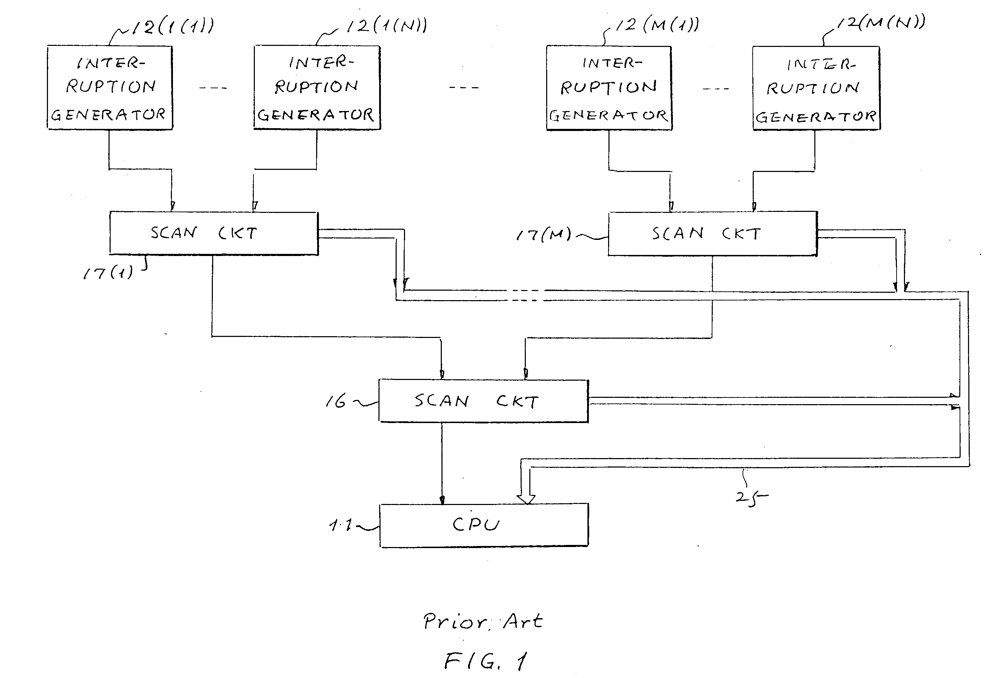

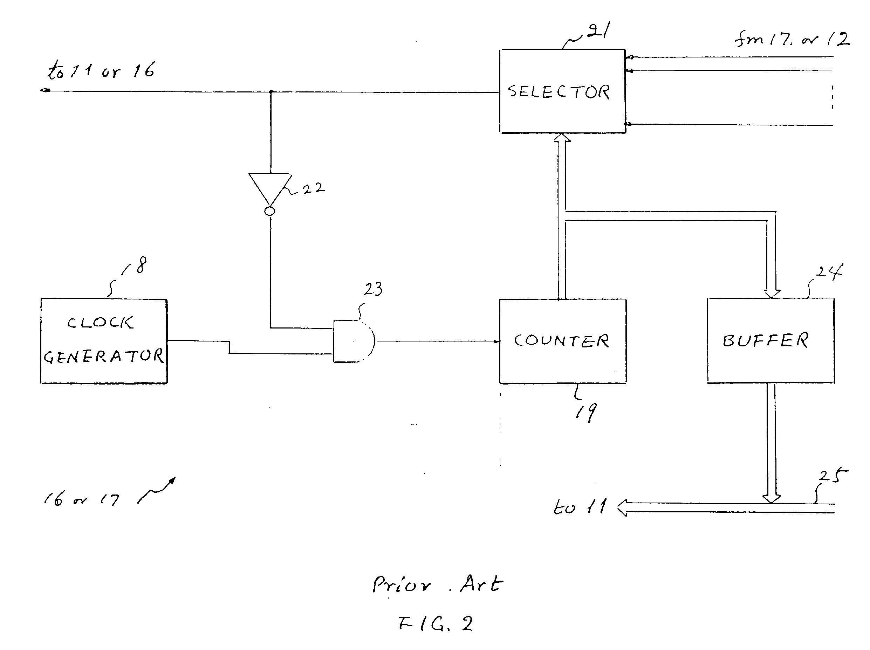

In such a hierarchical arrangement (see figures 1 and 2), the address of a particular unit is determined as follows:
- firstly, an address cycle to specify a particular group buffer,
- secondly, a data cycle to allow the specified group buffer to transmit its data,
- thirdly, a processing cycle to evaluate the data read from that buffer,
- fourthly, a second address cycle to specify the particular unit buffer addressed by the data read from the group buffer,
- fifthly, a second data cycle to allow the specified unit buffer to transmit its data, and
- finally a second processing cycle to evaluate the data read from the specified unit buffer.

Such an operation is clearly time-consuming.

The central processing unit only interrupts its operation with regard to the particular identified unit when supplied with the particular signal and the identification signal. It therefore takes an appreciably long time for the central processing unit to receive the identification signal and as a consequence to actually interrupt the operation after the interruption signal is generated by the particular unit.

Microprocessors and Microsystems, Vol 10, No. 5, June 1986, London, United Kingdom, Pages 258-267, A Clements "Exception Handling in the 68000, Part 2" also describes an interruption unit in which the address of an active interruption unit is determined by a central processing unit read operation. In the system described from P. 261, right hand column, line 38 to end of P. 262, the read cycle supplies a response signal to the identified interruption unit which then provides the CPU with an interruption vector containing data on the states of the interruption unit.

### SUMMARY OF THE INVENTION

The present invention provides an interruption circuit as defined in claim 1. Preferred features of the invention are defined in the dependent claims.

### BRIEF DESCRIPTION OF THE DRAWINGS:

Fig. 1 shows in blocks a previously proposed interruption circuit together with a central processing unit and a multiplicity of interruption generating units;
Fig. 2 is a block diagram of a scanning circuit for use in the interruption circuit illustrated in Fig. 1;
Fig. 3 shows in blocks an interruption circuit according to an embodiment of the instant invention in combination with a central processing unit and a multiplicity of interruption generating units;
Fig. 4 is a block diagram of a plurality of polling circuits for use in the interruption circuit shown in Fig. 3;
Fig. 5 is a block diagram of a scanning circuit for use in the interruption circuit depicted in Fig. 3;
Fig. 6 is a block diagram of each of a plurality of interruption response control circuits for use in the interruption circuit illustrated in Fig. 3;
Fig. 7 is a block diagram of each of the interruption generating units mentioned in connection with Fig. 3; and
Fig. 8 is a block diagram of the interruption circuit of Figure 3 including details of its constituent circuit elements as shown in Figures 4 to 7.

### DESCRIPTION OF THE PREFERRED EMBODIMENT:

Referring to Fig. 1, a previously proposed interruption circuit will first be described in order to facilitate an understanding of the present invention. Such an interruption circuit is for use in combination with a central processing unit (CPU) 11 and a multiplicity of interruption generating units or interruption sources which will be designated either singly or collectively by a reference numeral 12 for the time being.

The interruption generating units 12 are grouped into first to M-th groups, each group comprising first to N-th interruption generating units, where M represents a first plurality, and N represents a second plurality. In other words, there are M groups of interruption generating units 12, each group having N units. Although called "plurality", either of the first or the second pluralities may be equal to one. There may also be different numbers of interruption generating units 12 in the first to the M-th groups of interruption generating units 12. It will, however, be presumed merely for simplicity of the description that each group comprises a preselected number N of interruption generating units 12.

In an m-th group, an n-th interruption generating unit will be called an m(n)-th interruption generating unit and will be designated by 12(m(n)), where m represents a first selected number selected from one of 1 to and n represents a second selected number chosen from one of 1 to N. The m-th group therefore comprises m(l)-th through m(N)-th interruption generating units 12(m(l)) to 12(m(N)).

Each interruption generating unit 12 generates an interruption signal (an originating interruption signal) S(1) upon occurrence of an interruption requesting phenomenon (i.e. an interruption request). The multiplicity of interruption generating units 12 may consequently generate a plurality of interruption signals substantially simultaneously. The interruption circuit supplies such interruption signals to the central processing unit 11 and aims to prevent the CPU 11 being overloaded or congested with a plurality of interruption signals generated at the same time.

When supplied with an interruption signal from one of the interruption generating units 12 as a particular signal, the central processing unit 11 interrupts its operation related to the interruption generating unit from which the interruption signal is received. It follows as a consequence that the interruption circuit must supply the central processing unit 11 with an identification signal in order to enable the central processing unit 11 to identify that interruption generating unit 12 from which the interruption signal is received.

In Fig. 1, the interruption circuit comprises a combination of a single first scanning circuit 16 and M second scanning circuits 17(1) to 17(M) (for ease of reference and to avoid confusion with the first scanning circuit 16, hereinafter referred to as the polling circuit 17) arranged between the central processing unit 11 and the multiplicity of interruption generating units 12. The first to the M-th scanning circuits 17 (suffixes omitted) are each connected, on actually putting the interruption circuit in operation, to the single scanning circuit 16 and to the interruption generating units 12 of the corresponding one of the M groups. In such a manner, an m-th scanning circuit 17(m) is connected to the m(l)-th to the m(N)-th interruption generating units 12(m(l)) to 12(m(N)).

For the reason which will presently become clear, the first through the M-th scanning circuits will now be referred to as first through M-th polling circuits 17(1) to 17(M) with the m-th scanning circuit called an m-th polling circuit 17(m). The single scanning circuit will therefore be referred to simply as a scanning circuit 16.

Turning to Fig. 2 with reference to Fig. 1 continued, each scanning circuit 16 or 17 includes a clock generator 18 for generating a sequence of clock pulses. In the manner which will presently be described, the clock pulses are delivered to a counter 19 for counting the clock pulses supplied thereto.

The counter 19 of the first scanning circuit 16 has a full count equal to a first predetermined number which is not less than the first plurality M (i.e. number of groups) in the single scanning circuit 16 and the counter 19 associated with each polling circuit 17 has a full count equal to a second predetermined number which is not less than the second plurality N (i.e. number of groups) in each of the respective M polling circuits 17. For convenience of the description which follows and by way of example the first predetermined number will be represented by M and the second predetermined number, by N (i.e. be equal to the number of groups and units within a group respectively).

Under the circumstances, the counter 19 repeatedly or cyclically counts up a first count from 1 up to the first predetermined number M in the single scanning circuit 16 and a second count from 1 up to the second predetermined number N in each of the first to the M-th polling circuits 17. The first count of 1 to M corresponds to the first to the M-th polling circuits 17. The second count of 1 to N corresponds to the m(l)-th to the m(N)-th interruption generating units 12(m(l)) to 12(m(N)) in the m-th polling circuit 17(m).

In the scanning circuit 16 or polling circuit 17 illustrated in Fig. 2, a count signal representative of the first or the second count is supplied to an interruption signal selector 21. In the m-th polling circuit 17(m), the selector 21 is for receiving the originating interruption signal or signals S(1) from the m(l)-th to the m(N)-th interruption generating units 12(m(l)) to 12(m(N)). In the manner which will shortly become clear, the selector 21 of a polling circuit selects one such originating interruption signals at a time for delivery as a once relayed interruption signal S(2) to the single scanning circuit 16. In the single scanning circuit 16, the selector 21 is connected to the selectors 21 of the first to the M-th polling circuits 17 to select one of the once relayed interruption signals at a time for delivery as a twice relayed interruption signal S(3) to the central processing unit 11 as a particular signal.

Referring more particularly to Fig. 2, it will be surmised that each of the originating, the once relayed, and the twice relayed interruption signals has a logic one level. The interruption signal S(2) or S(3) is supplied from the interruption signal selector 21 through an inverter 22 to a first input terminal of a two-input AND gate 23 which has a second input terminal connected to the clock generator 18 and an output terminal connected to the counter 19. The logic one level of an interruption signal is inverted by the inverter 22 to a logic zero level, and thus inhibits supply of the clock pulses from the clock generator 18 to the counter 19 through the AND gate 23.

Assuming that the interruption signal selector 21 of the single scanning circuit 16 has selected the once relayed interruption signal supplied from the m-th polling circuit 17(m), count up of the first count is suspended at a first selected count m. When the selector 21 selects the originating interruption signal received from the m(n)-th interruption generating unit 12(m(n)), count up of the second count is suspended at a second selected count n in the m-th polling circuit 17(m). The count signal representative of the first selected count m or the second selected count n is stored in a selected count buffer 24.

On receiving the twice relayed interruption signal as the particular signal, the central processing unit 11 begins to deal with the particular signal. The selected count buffers 24 of the single scanning circuit 16 and the m-th scanning circuits 17(m) are controlled to deliver the count signals representative of the first and the second selected counts m and n to the central processing unit 11 through a data bus 25. These count signals collectively form the identification signal which identifies the m(n)-th interruption generating unit 12(m(n)) as the particular unit generating the interruption signal relayed to the CPU (i.e. the active unit) in the manner described above. When supplied with the identification signal, the central processing unit 11 interrupts its operation related to the particular active unit which has been identified.

Reviewing Figs. 1 and 2, it is now understood that basic requirements are satisfied by the interruption circuit. That is to say, only one of the originating interruption signals is supplied to the central processing unit 11 at a time as the particular signal. Thus, congestion at the central processing unit 11 of such interruption signals is avoided. Furthermore, the particular unit is identified thus enabling the central processing unit 11 to duly carry out its interruption operation with regard to a particular active interruption generating unit. It should, however, be noted that an appreciably long interval of time is necessary to interrogate the count busters 24 and identify the particular active unit. Consequently, the circuit of Figures 1 and 2 requires significant processing time to completely deal with a particular signal received by the CPU.

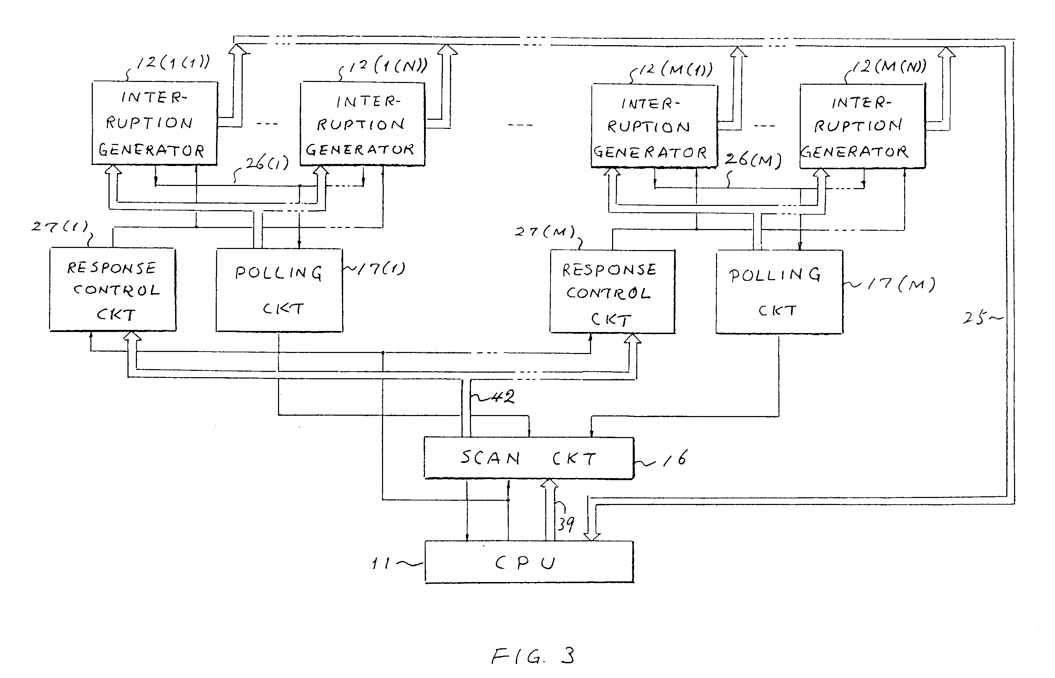

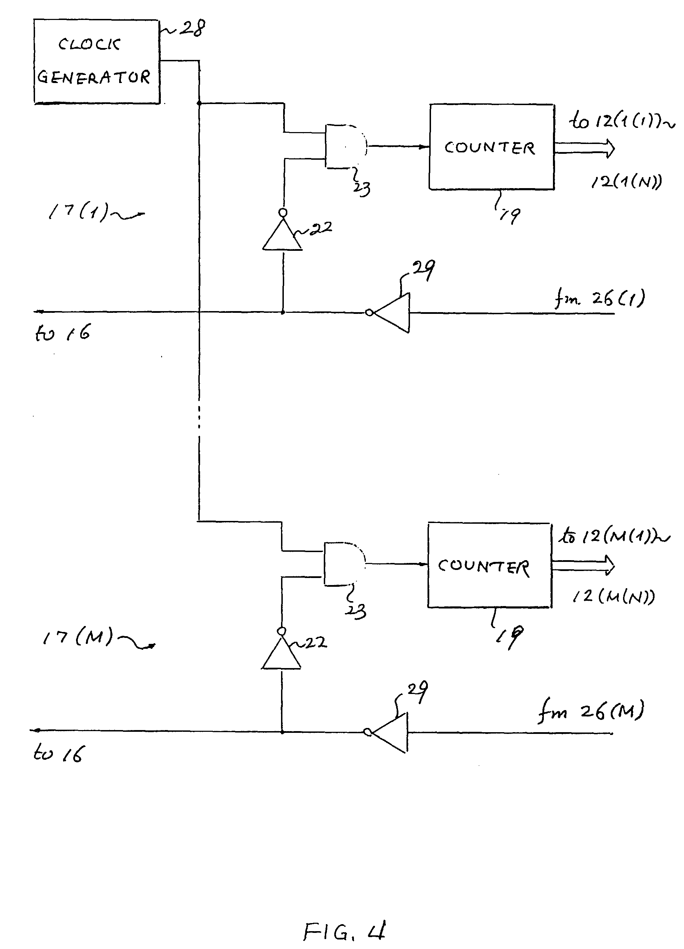

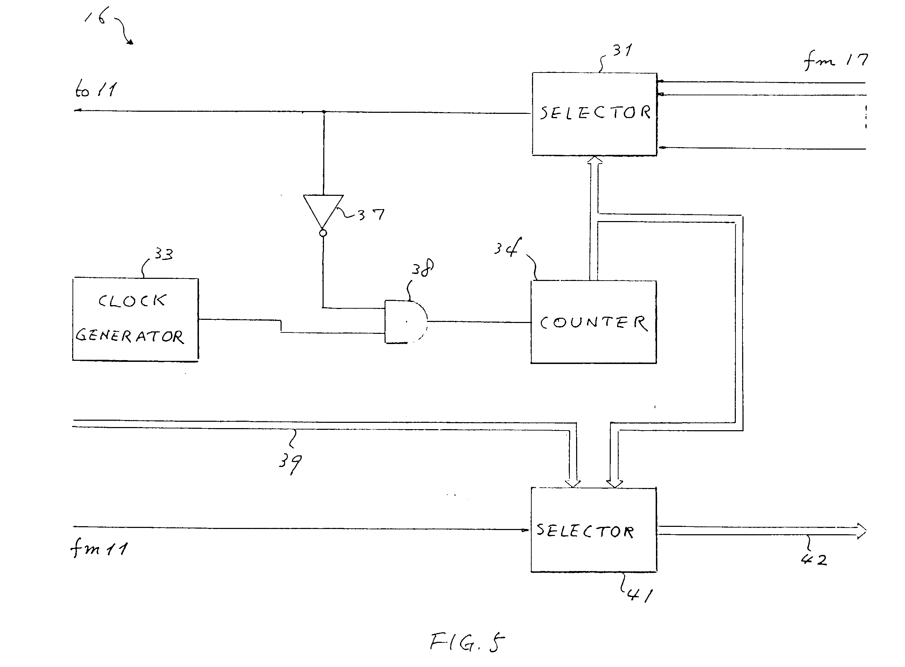

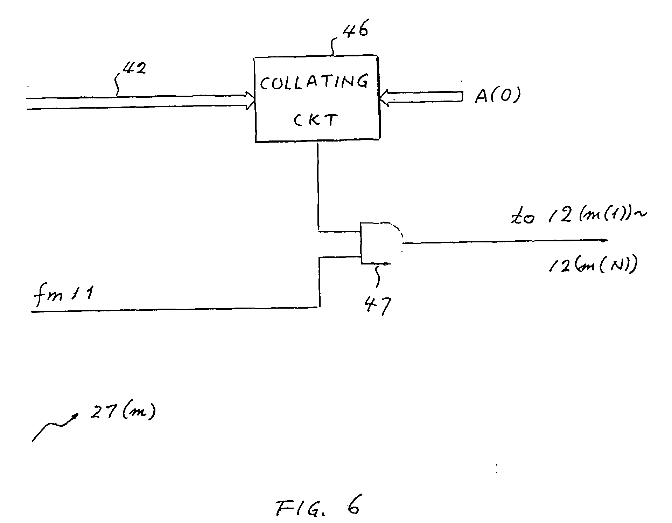

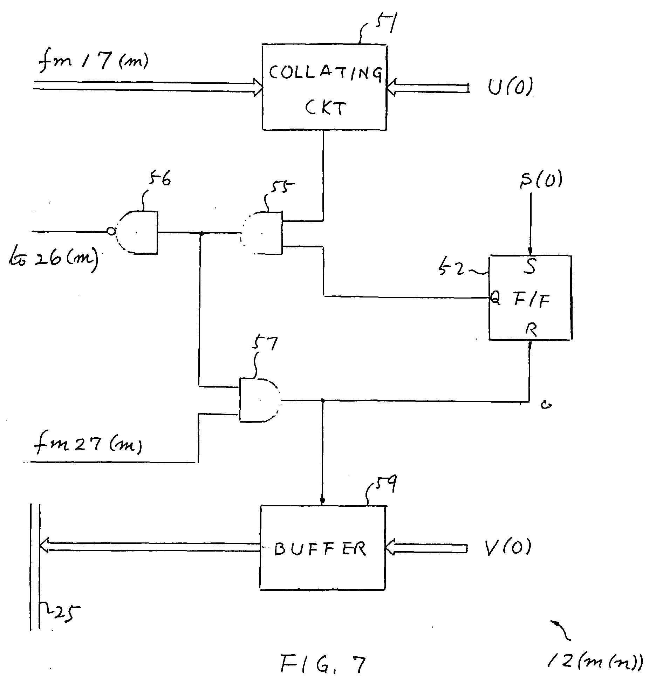

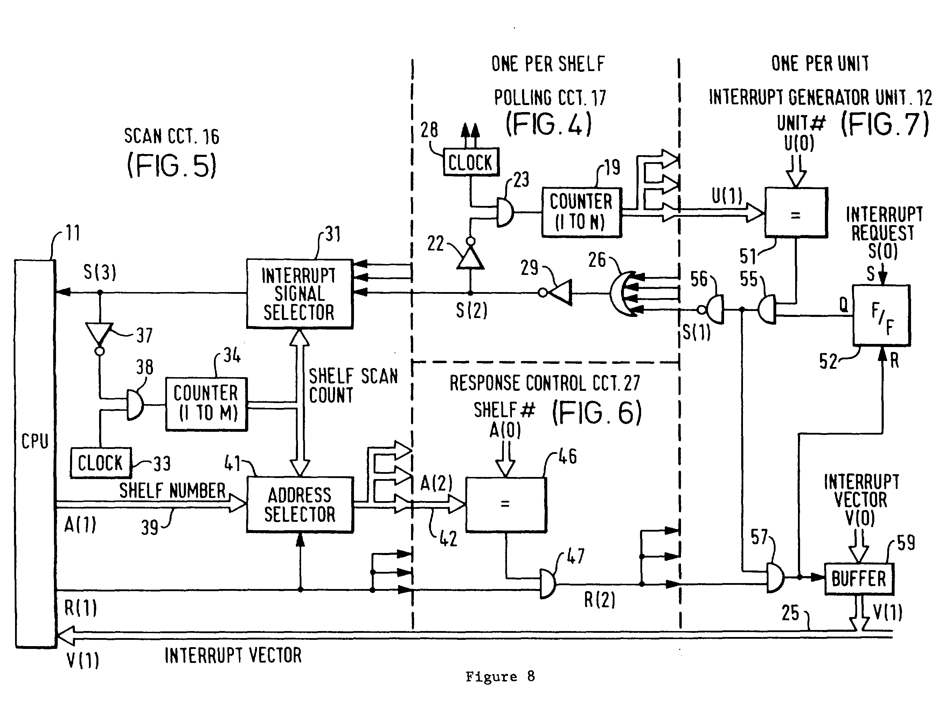

Referring now to Figs. 3 and 8, attention will be directed to an interruption circuit according to a preferred embodiment of this invention. Similar parts are designated by like reference numerals and are, unless otherwise positively mentioned, similarly operable with likewise named signals which are indicated by like reference symbols.

A shelf number will now be used to identify each of 1 through to the first predetermined number M (i.e. number of polling circuits). A generating unit number will be used to identify each of 1 through to the second predetermined number N (i.e. number of generating units in respective group). The shelf number may be variable between zero (0) and the first predetermined number less one (M-1), both inclusive. The shelf number representative of (m-1) indicates in this event the m-th polling circuit 17(m) and the m-th group of interruption generating units 12(m(l)) through 12(m(N)). The unit number may similarly between zero and the second predetermined number less one (N - 1), both inclusive. When the shelf number represents (m - 1), the unit number representative of (n - 1) identifies the m(n)-th interruption generating unit 12(m(n)).

In a typical set of numerical examples, the first predetermined number M is equal to eight. The second predetermined number N is equal to thirty-two. Under the circumstances, the multiplicity can theoretically be equal to two hundred and fifty-six. The multiplicity is, however, equal in practice to one hundred and ninety-two. In this event, use is not made of the shelf number representative of zero and one. It is nevertheless possible in such a case to renumber the groups of interruption generating units afresh from 1 to the first plurality M.

The combination of the scanning circuit 16 and the first through to the M-th polling circuits 17 is herein called a scanning arrangement. Interposed between the central processing unit 11 and the multiplicity of interruption generating units 12, the scanning arrangement (16, 17) scans the interruption generating units 12 to specify one of the interruption generating units 12 at a time as the particular unit mentioned before and supplies, as a twice relayed interruption signal S(3), the originating interruption signal S(1) generated by the particular unit when active.

It will be understood in the interruption circuit being illustrated that the first through to the M-th polling circuits 17 are connected in practice to the interruption generating units 12 of the first through to the M-th groups by first through to M-th wired OR circuits 26(l) to 26(M). An m-th wired OR circuit 26(m) is used between the m-th polling circuit 17(m) and the interruption generating units 12(m(l)) to 12(m(N)) of the m-th group. A combination of the first to the M-th wired OR circuits 26 (suffixes omitted) is herein referred to as a connection arrangement.

An m-th interruption signal generated by an interruption generating unit of the m-th group is delivered to the m-th polling circuit 17(m) through the m-th wired OR circuit 26(m).

In the manner which will shortly be described, the m-th polling circuit 17(m) selects as a once relayed interruption signal S(2) one of the originating interruption signals which are received either singly or collectively as the m-th interruption signal. On receiving the twice relayed interruption signal as the particular signal, the central processing unit 11 produces an interruption acknowledgement signal as an originating response signal R(1) with a logic one level.

The central processing unit 11 may be a one-chip unit which comprises an interruption signal receiving hardware circuit (not shown). On receiving the particular signal (i.e. the twice relayed interruption signal), the interruption signal receiving hardware circuit begins to deal with the particular signal while producing the originating response signal R(1).

Between the central processing unit 11 and the interruption generating units 12, the interruption circuit comprises a plurality of interruption response control circuits corresponding to the first through to the M-th polling circuits 17. Identified by the respective shelf numbers, the interruption response control circuits are referred to as first through to M-th control circuits 27(1) to 27(M). An m-th control circuit 27(m) corresponds to the m-th polling circuit 17(m). When desired, it is possible to refer to a combination of the m-th polling circuit 17(m), the m-th control circuit 27(m), and the m-th group of interruption generating units 12(m(l)) through 12(m(N)) as an m-th shelf.

The interruption response control circuits (i.e. the first through to the M-th control circuits 27 (suffixes omitted)) serve as a response supply arrangement. Interposed between the central processing unit 11 and the multiplicity of interruption generating units 12 and in the manner which will later be described, the response supply arrangement (27) supplies the originating response signal R(1) produced by the CPU 11 to acknowledge the interruption request signal generated by a particular unit, to the particular unit as a relayed response signal R(2) with a logic one level.

In the manner which will further later be described, the m(n)-th interruption generating unit 12(m(n)) delivers an m(n)-th interruption vector to the data bus 25 when supplied by the response supply arrangement with the relayed response signal. Each of the multiplicity of interruption generating units 12 has a specific interruption vector. For the set of numerical examples described above, the interruption vector has eight bits, three bits representing the shelf number and five additional bits representing the generation unit number. When produced by a particular active unit, such an interruption vector V(1) is supplied through the data bus 25 to the central processing unit 11 as the identification signal described before.

The data bus 25 serves as a vector supply arrangement. The vector supply arrangement (25) is interposed between the central processing unit 11 and the interruption generating units 12 and supplies the central processing unit 11 with the interruption vector V(1) produced by a particular active unit. The central processing unit 11 interrupts its operation related to the particular unit supplied with the interruption vector in addition to the particular signal from the particular active unit (i.e. the active relayed interruption signal). When such an interruption vector comes to an end, the central processing unit 11 gives an end to the originating response signal. A logic zero signal is therefore produced by the central processing unit 11 when the interruption vector ceases.

Turning now to Figs. 4 and 8, each of the M polling circuits 17 is connected to a common clock generator 28 for generating a sequence of common clock pulses. The common clock pulse sequence preferably has a polling clock frequency of 1 MHz. When the polling clock frequency is rendered higher, it becomes difficult to implement the polling circuits 17.

The m-th polling circuit 17(m) comprises an m-th counter which is equivalent to the counter 19 described in conjunction with Fig. 2 and will consequently be designated by the reference numeral 19. The m-th counter 19 has a full polling count which is equal to the second predetermined number N. Supplied with the common clock pulses in the manner which will be described herein under, the m-th counter 19 counts the common clock pulses as an m-th count from an initial count of zero up to the full polling count (i.e. N-1). When the full polling count is reached, the m-th count is reset to the initial count. As a consequence, the m-th counter 19 repeatedly or cyclically counts up the m-th count from zero to the second predetermined number less one (N-1) if continuously supplied with the common clock pulses.

The m-th counter 19 produces an m-th unit selection signal U(1) representative of the m-th count. The m-th polling circuit 17(m) cyclically scans the m(l)-th through the m(N)-th interruption generating units 12(m(l)) to 12(m(N)) by supplying the m-th unit selection signal U(1) to the interruption generating units 12(m(l)) through 12(m(N)) of the m-th group, to specify one of the m(l)-th through to the m(N)-th interruption generating units 12(m(l)) to 12(m(N)) at a time as an identified or selected unit. The m-th count therefore repeatedly varies between 1 and the second predetermined number N.

Assuming that the originating interruption signal S(1) has a logic zero level, an m-th primary inverter 29 then gives a logic one level to the m-th interruption signal supplied thereto through the m-th wired OR circuit 26(m). An m-th secondary inverter and an m-th two-input AND gate are equivalents of the inverter 22 and the two-input AND gate 23 described in conjunction with Fig. 2 and are consequently indicated by the reference numerals 22 and 23.

The m-th primary inverter 29 serves as an m-th delivery arrangement. The m-th delivery arrangement (2a) inter-posed between the scanning circuit 16 and the interruption generating units 12 supplies -the scanning circuit 16 with the m-th interruption signal as the once relayed interruption signal S(2) having a logic one level.

The m-th secondary inverter 22 and the m-th two-input AND gate 23 serves as an m-th controller for the m-th group of interrupt generator units. The m-th controller (22,23) is connected to the common clock generator 28 (as are the controllers for each polling circuit), to the m-th counter 19, and to the m-th delivery arrangement (29)and supplies pulses from the common clock (28) to the m-th counter 19. For each group associated with a polling circuit the counter 19 continues to count up when none of its associated interruption generating units 12(mW) to 12(m(N)) generates an originating interruption signal.

When an interruption signal is generated by a unit within the m-th group, the m-th controller suspends supply of the common clock pulses to the m-th counter 19 and suspends the count. If the interruption signal is the m(n)-th interruption signal (i.e. active unit is m-th unit with m-th group or shelf), the count up is suspended when the count in the m-th polling circuit is n.

An overall combination of the m-th delivery arrangement and the m-th controller serves as an m-th controlling arrangement. The m-th controlling arrangement (22,23,29) connected to the m-th counter 19 and the m-th wired OR circuit 26(m) between the scanning circuit 16 and the m(l)-th to m(N)-th interruption generating units 12(m(l)) to 12(m(N)), makes the m-th counter 19 count up the m-th count repeatedly from the initial count to the full polling count when no originating interruption signal is generated by the m(l)-th to m(N)-th interruption generating units 12(m(l)) to 12(m(N)).

The m-th controller of the m-th controlling arrangement however suspends counting at the second selected count when the m(n)-th interruption signal is generated. The m-th delivery arrangement m-th controlling arrangement then supplies the scanning circuit 16 with the m-th interruption signal when the counting is suspended by the generating of an interruption signal.

Reviewing Fig. 4 and 8, it should be noted that the first through the M-th polling circuits 17 may be installed at separate locations. In such an event, use of the common clock generator 28 is objectionable and it is preferred that each m-th polling circuit 17(m) should include an m-th clock generator for generating an m-th sequence of clock pulses (which may be called m-ary clock pulses). In the first to M-th polling circuits 17, such clock generators can asynchronously generate independent sequences of clock pulses.

Further turning to Fig. 5 with Fig. 3 and 8 additionally referred to, the scanning circuit 16 comprises an interruption signal selector 31 supplied, like the interruption signal selector 21 described in conjunction with Fig. 2, with the once relayed interruption signal or signals S(2) of logic one level from the M delivery arrangements of the first through the M-th polling circuits 17. The selector 31 is controlled in the manner described with reference to Fig. 2 and will presently be described.

A scan clock generator 33 generates a sequence of scan clock pulses at a scan clock frequency which is typically 1 Mhz (similar to the polling clock frequency). The scan clock pulse sequence need not be synchronized with the sequence of either the common clock pulses or of the m-ary clock pulses. Furthermore, the scan clock (28) frequency need not be equal to the polling clock frequency.

A scan counter 34 has a full scan count which is equal to the first predetermined number M (number of polling circuits). Supplied with the scan clock pulse sequence in the manner which will be described below, the scan counter 34 counts the scan clock pulses as a scan count from an initial count of zero up to the full scan count. When the full scan count is reached, the scan count is reset to the initial count. Consequently, the scan counter 34 repeatedly or cyclically counts up the scan count from zero to the first predetermined number less one (M-1).

The scan counter 34 produces a scan count signal representative of the scan count. Controlled by the scan count signal, the interruption signal selector 31 selects one of the once relayed interruption signals S(2) at a time and supplies it as a twice relayed interruption signal S(3) having a logic one level to the central processing unit 11.

Using the scan count signal in this manner, the scanning circuit 16 cyclically scans the M polling circuits 17 to specify one of the polling circuits 17 at a time as a particular or selected circuit. An identified unit is a particular unit specified by a particular polling circuit.

The twice relayed interruption signal S(3) is supplied through an inverter 37 to a first input terminal of a two-input AND gate 38 which has a second input terminal connected to the scan clock generator 33 and an output terminal connected to the scan counter 34. Inverted by the inverter 37 to the logic zero level. the logic one level of the twice relayed interruption signal inhibits supply of the scan clock pulses from the scan clock generator 33 to the scan counter 34 when the scanning circuit 16 specifies a polling circuit 17 which itself specifies an active interrupt generator unit generally an interruption request S(O).

Assuming that the twice relayed interruption signal is derived from the once relayed interruption signal supplied from an m'-th polling circuit 17(m'), where m' represents an arbitrary one of the M polling circuits, supply of the scan clock pulses to the scan counter 34 is suspended when the scan count reaches the polling circuit count m' corresponding to the polling circuit connected to the particular active generator unit generating the interrupt request S(O). The m'-th counter of the m'-th polling circuit is similarly suspended at the generator unit count and corresponding to the active unit.

In the manner described in the foregoing, the central processing unit 11 produces an interruption acknowledgement signal (i.e. the originating response signal R(1)). It may be mentioned here that the central processing unit 11 also supplies an address bus 39 with a shelf number signal A(1) whose function will become clear as the description proceeds. The m-th (or polling) count and the scan count are suspended as described so as not to undesiredly bring about an end to the twice relayed interruption signal S(3) which may continue from one microsecond to several hundreds of microseconds depending on the instruction under execution by the central processing unit 11.

The scanning circuit 16 includes an address selector 41 which is supplied with the scan count signal from the scan counter 34 and with the shelf number signal A(1) through the address bus 39. The address selector 41 is controlled by the originating response signal.

In the absence of the originating response signal, the address selector 41 delivers the shelf number signal to an address bus 42. However, when the scan count is suspended at the first selected count m', an originating response signal is produced and the address selector 41 supplies the scan count signal to the address branch 42 as an address signal A(2). The shelf number signal then indicates the polling circuit count m' as the address signal.

It will be seen in Fig. 3 and 8 that the address bus 42 is connected to the M interruption response control circuits 27. The scanning circuit 16 therefore produces an address signal A(2) which specifies that one of the M control circuits 27 that corresponds to the particular or selected circuit m' of the M polling circuits 17 which has relayed an interruption request signal S(2) to the scanning circuit 16 and hence to the CPU 11.

Referring more particularly to Fig. 5 and 8, the interruption signal selector 31 serves as a scan delivery arrangement. The scan delivery arrangement or interrupt signal selector (31) is connected to the scan counter 34 between the central processing unit 11 and the M polling circuits 17 and supplies the central processing unit 11 with a twice relayed interruption signal which is delivered from the m-th polling circuit 17(m).

A combination of the inverter 37 and the two-input AND gate 38 serves as a scan controller. The scan controller (37,38) is connected to the scan counter 34, the scan clock generator 33, and the scan delivery arrangement or interrupt signal selector 31, and supplies the scan counter 34 with the scan clock pulses. The scan counter 34 counts up the scan count in the absence of an interruption signal being relayed from the M polling circuits 17.

When supplied with the m'-th interruption signal from the m'-th polling circuit 17(m'), the scan controller suspends supply of the scan clock pulses from the scan clock generator 33 to the scan counter 34 and suspends count up of the scan count at the first selected count m'. If the m'-th interruption signal is delivered from a particular polling circuit, the scan counter 34 is suspended when the scan count signal indicates that particular polling circuit whose shelf includes the particular active interrupt request unit. In this manner, a particular active unit is specified by the polling and scanning circuits 17,16.

An overall combination of the scan delivery arrangement (31) and the scan controller (37,38) serves as a scan controlling arrangement. The scan controlling arrangement (36,37,38) is connected to the scan counter 34 between the central processing unit 11 and the M polling circuits 17. The scan controlling arrangement (31, 37, 38) makes the scan counter 34 count up the scan count repeatedly from the initial count up to the full scan count in the absence of an interruption signal from the M polling circuits 17. The scan controller (37,38) of the scan controlling arrangement suspends count up of the scan count at the first selected count m when supplied with a once relayed interruption signal S(2) from a m-th polling circuit 17(m). The scan delivery arrangement (31) of the scan controlling arrangement supplies the central processing unit 11 with the interruption signal under consideration when count up of the scan count is suspended at the count m.

Referring to Fig. 6 with Fig. 3 and 8 continuously referred to, the m-th response control circuit 27(m) is assigned with an m-th interruption response number A(O) which is equal to the shelf number given to the m-th interruption response control circuit under consideration by the CPU 11 assistance through the numbers of the M response control circuits.

The m-th response control circuit 27(m) comprises an m-th address collating circuit 46 between the central processing unit 11 and the interruption generating units 12(m(l)) to 12(m(N)). The collating circuit 46' is supplied with the address signal A(2) from the scanning circuit 16 through the address bus 42 and with an m-th internal signal A(1) representative of the m-th interruption response number.

When the once relayed interruption signal S(2) is supplied from the m-th polling circuit 17(m) to the central processing unit 11 through the scanning circuit 16 as the twice relayed interruption signal, the address signal A(1) represents a first selected count m (the scan count of a polling circuit containing an active interruption generating unit). The m-th address collating circuit 46 compares the interruption response number A(0) with the first selected count or address signal A(2). When a coincidence is found, the collating circuit 46 produces an m-th coincidence signal with a logic one level.

When the interruption circuit is in operation an m-th two-input AND gate 47 has a first input terminal supplied with the originating response signal R(1) from the central processing unit 11, a second input terminal connected to the m-th address collating circuit 46, and an output terminal which is connected to the interruption generating units 12(m(l)) to 12(m(N)). Accordingly, when the interruption response number A(O) and address A(2) derived from stopped scan count coincide, the m-th coincidence signal is produced and the originating response signal R(1) is delivered to the interruption generating units 12(m(l)) through 12(m(N)) of the m-th group as a relayed response signal R(2). In the absence of the coincidence signal, the originating response signal is not relayed to the m(1)-th through the m(N)-th interruption generating units 12(m(l)) to 12(m(N)).

The m-th two-input AND gate 47 serves as an m-th supply arrangement. The m-th supply arrangement (47) connected to the m-th collating circuit 46 between the central processing unit 11 and the m(l)-th to the m(N)-th interruption generating units 12(m((1)) to 12(m(N)) supplies a response signal to the m(N)-th interruption generating units 12(m(l)) to 12(m(N)) when an m-th coincidence signal is produced.

The combination of the interruption response control circuits (i.e. the first to the M-th control circuits 27) therefore serves as a response supply arrangement. Interposed between the central processing unit 11 and the multiplicity of interruption generating units 12, the response supply arrangement (27) supplies the particular active interrupt request generating unit with the response signal produced by the central processing unit 11 in response to the particular signal S(3) derived from the interrupt request S(O) produced by that particular unit. Incidentally, it should be noted in this connection that the relayed response signal R(2) is supplied to the interruption generating units 12(m(l)) through 12(m(N)) of the m-th group in which the particular active unit is included.

Turning now to Fig. 7 with Fig. 3 and 8 further continuously referred to, attention will now be directed to the m(n)-th interruption generating unit 12(m(n)). An m(n) -th unit number U(O) (the generating unit number) is assigned to the m(n)-th interruption generating unit 12(m(n)). The m(n) -th unit number is representative of the second selected number n alone (i.e. number of unit within shelf). Accordingly, the m(n)-th unit number will hereinafter be referred to as an n-th unit number.

The m(n)-th interruption generating unit 12(m(n)) includes an m(n)-th number collating circuit 51. When supplied with the m-th unit selection signal U(1) from the m-th counter 19 (Fig. 5 and 8) of the m-th polling circuit 17(m) and with an m(n)-th internal signal U(O) representative of the n-th unit number, the collating circuit 51 compares the m-th count (i.e. count by m-th polling circuit) with the n-th unit number. When count up of the m-th count is suspended at the second selected number n, the collating circuit 51 produces an m(n)-th coincidence signal.

A flip-flop circuit having a set terminal S, a reset terminal R, and an output terminal Q is used as an m(n)-th one-bit memory 52. When an interruption request is generated by the m(n)-th interruption generating unit 12(m(n)), an interruption signal is set or stored in the m(n)-th one-bit memory 52 as an m(n)-th memorized signal S(O).

The m(n)-th coincidence signal produced by the collating circuit 51 is delivered to a first input terminal of an m(n)-th primary AND gate 55 which has a second input terminal connected to the m(n)-th one-bit memory 52. Therefore, when the m(n)-th memorized signal is present in the m(n)-th one-bit memory 52 and the unit selection signal U(1) from the m-th polling circuit equals the unit number signal U(0), the primary AND gate 55 supplies the m(n)-th memorized signal S(O) to an open collector gate 56. The m(n)-th memorized signal is delivered from the open collector gate 56, with a logic zero level as the m(n)-th (the originating Interruption signal) S(1) to the m-th polling circuit 17(m) through the m-th wired OR circuit 26(m).

The m(n)-th memorized signal is also delivered through the primary AND gate 55 to the first input terminal of an m(n)-th secondary AND gate 57 which has a second input terminal supplied with the relayed response signal R(2) by the m-th control circuit 27(m).

Therefore when the m(n)-th memorized signal S(O) is present in the m(n)-th one-bit memory 52 (i.e. m-th unit of shelf generates an interrupt request) and when the m-th control circuit 27(m) produces a relayed response signal R(2), the secondary AND gate 57 produces an m(n)-th energizing signal for use in the manner which will shortly be described. As described above, the m(n)-th interruption generating unit 12(m(n) generates the m(n)-th interruption signal with the logic zero level when it generates an interruption request and when the m-th unit selection signal U(1) representative of the second selected number n is produced after storage of the interruption request as the m(n)-th memorized signal in the m(n)-th one-bit memory 52.

The m(n)-th interruption generating unit 12(m(n)) including an m(n)-th buffer 59 in which an m(n)-th vector signal V(O) is stored. The m(n)-th energizing signal produced by the secondary AND gate 57 energizes the m(n)-th buffer 59 to supply the m(n)-th vector signal as an m(n)-th interruption vector V(1) to the data bus 25. In the manner described hereto before, this interruption vector consists of three bits representative of the shelf number (m) and five additional bits representative of the n-th unit number (n). The central processing unit 11 can readily read the shelf number and the generating unit number from the interruption vector V(1) and identify one of the multiplicity of interruption generating units 12 as the particular unit.

After completion of dealing with the particular signal S(3) derived from an interrupt request S(O), the central processing unit 11 stops production of the originating response signal under consideration until another particular signal S(3) derived from an active interrupt request unit is received either from the same M(n)-th interruption generating unit 12(m(n)or another of the multiplicity of interruption generating units 12. When the response signal in question disappears, the energizing signal from the secondary AND gate 57 also disappears and disappears and the m(n)-th one-bit memory 52 is reset (see Figures 7 and 8). The memorized signal is therefore lost from the m(n)-th one-bit memory 52 until the m(n)-th interruption generating unit 12(m(n)) generates a fresh interrupt request S(O).

Reviewing Figs. 3 to 8, the combination of the gates 55 to 57 serves as an m(n)-th controller when the m(n)-th coincidence signal is produced and a memorized signal is present in the m(n)-th one-bit memory 52. This m(n)-th controller (55-57) connected to the m-th controlling arrangement (22,23,29), the m-th supply arrangement (47), the m(n)-th collating circuit 51, and the m(n)-th one-bit memory 52, makes the m(n)-th one-bit memory 52 supply the m(n)-th interruption signal (S(O);S(1)) to the m-th controlling arrangement (22,23,29) through the m(n)-th controller (55-57) and the m-th wired OR circuit 26(m).

This combination of a m(n)-th coincidence signal and a memorised signal in the memory 52 is, as discussed above, produced when the relayed response signal R(2) is supplied to the m(l)-th through the m(N)-th interruption generating units 12(m(l)) to 12(m(N)) while the m(n)-th interruption signal is delivered to the m-th controlling arrangement (22,23,29). In addition, the m(n)-th controller (55-57) makes the m(n)-th buffer 59 supply the m(n)-th interruption vector V(1) to the data bus 25 when the relayed response signal R(2) is supplied to the interruption generating units 12(m(l)) to 12(m(N)) during supply of the m(n)-th interruption signal S(1) to the m-th controlling arrangement (22,23,29). The m(n)-th controller (55-57) then resets the m(n)-th one-bit memory 52 when the central processing unit 11 gives an end to the originating response signal R(1). Incidentally, it should be understood that the m(n)-th buffer 59 is connected to the data bus (i.e. the vector supply arrangement) 25 and to the m(n)-the controller (55-57).

It will now be assumed that the central processing unit 11 is one that is manufactured and sold by Motorola under the trade name of MC 68010 and is put in operation with a machine clock frequency of 10 MHz. With a conventional interruption circuit of the type described with reference to Figs. 1 and 2, it takes 2.0 microseconds to acknowledge receipt of the twice relayed interruption signal R(3) and an additional 9.6 microseconds to receive the identification signal. In marked contrast, it takes only 2.0 microseconds with an interruption circuit illustrated with reference to Figs. 3 to 8 to acknowledge receipt of the twice relayed interruption signal as the particular signal and for the CPU 11 to receive the m(n)-th interruption vector.

While this invention has thus far been described in specific conjunction with a sole preferred embodiment thereof, it will now be readily possible for one skilled in the art to put this invention into practice in various other manners. For example, it is possible to give each originating interruption signal S(1) the logic one level. When a computer system comprises a plurality of central processing units 11, an interruption circuit could be used in connection with each of the central processing units. A memory for a plurality of bits can also be substituted for the one-bit memory 52.

## Claims

1. An interruption circuit for use in combination with a central processing unit (11) and a multiplicity of interruption generating units (12), each of the interruption generating units generating an interruption signal upon occurrence of an interruption request, the interruption circuit comprising:
a scanning arrangement (16,17) between the central processing unit and the interruption generating units for scanning the interruption generating units to specify one of the interruption generating units at a time as a particular unit and for supplying the central processing unit with the interruption signal generated by the specified particular unit to make said central processing unit (11) produce a response signal;
the scanning arrangement (16, 17) including address register means (19, 34) for storing the address of the specified particular unit;
a response supply arrangement (16,27) between the central processing unit (11) and the interruption generating units (12) for supplying the response signal to the specified particular unit;
the response supply arrangement (16, 27) being coupled to the address register means (19, 34) to receive the address of the specified particular unit, and including gate means (47, 57) for specifying a signal path from the central processing unit (11) to the specified particular unit, the response supply arrangement (16, 27) and each of the interruption generating units (12) comprising collating means (46, 51) coupled to the scanning arrangement address register means (19, 34) and the gate means (47, 57) for, as a result of a comparison with the address stored in the address register means (19, 34), creating a signal path from the central processing unit (11) to the specified particular unit by opening said gate means (47, 57) ;
the interruption circuit further including a vector supply arrangement (25, 59) between the central processing unit and the interruption generating units for making the specified particular unit supply, upon reception of the response signal, the central processing unit with an interruption vector which is specific to each of the interruption generating units and makes the central processing unit interrupt its operation related to the specified particular unit.

2. An interruption circuit as claimed in claim 1, said interruption generating units being grouped into M first to M-th groups including an m-th group, where M represents a first plurality, m represents a first selected number selected from between l and M, both inclusive, the m-th group comprising m(1)-th to m(N)-th interruption generating units, where N represents a second plurality, wherein the scanning arrangement comprises:
first to M-th polling circuits (17), including an m-th polling circuit, the m-th polling circuit being for cyclically scanning the m(1)-th to m(N)-th interruption generating units to specify an m(n)-th interruption generating unit as a particular unit, where n represents a number selected from between 1 and N, both inclusive;
a connection arrangement (26) between the first to M-th polling circuits (17) and the first to M-th groups, respectively; and
a scanning circuit (16) between said central processing unit (11) and the first to M-th polling circuits (17) for cyclically scanning the M polling circuits (17) to specify one of the polling circuits at a time as a particular circuit, the identified unit being the particular unit specified by m-th polling unit when the m-th polling unit is the specified particular circuit;
each of the plurality of interruption generating units (12) producing an interruption signal when specified as a particular unit by a polling circuit whilst generating an interruption request;
the particular polling circuit and the scanning circuit supplying the central processing unit with the interruption signal generated by the specified particular unit and supplied to the specified particular polling circuit through the connection arrangement (26).

3. An interruption circuit as claimed in claim 2, wherein:
the response supply arrangement (16,27) comprises M first to M-th control circuits (27) between the central processing unit and the first to M-th groups respectively, the first to M-th control circuits (27) including an m-th control circuit corresponding to the m-th polling circuit;
the address register (34) of the scanning circuit (16) specifying the particular control circuit (16) corresponding to the particular polling circuit;
the gate means (47) of the m-th control circuit supplying the response signal to the m(1)-th to m(N)-th interruption generating units when specified as the particular control circuit;
the m(n)-th interruption generating unit receiving the response signal when specified by the particular polling circuit as the particular unit.

4. An interruption circuit as claimed in any preceding claim wherein the vector supply arrangement (25, 59) comprises a data bus (25) between the central processing unit (11) and the multiplicity of interruption generating units, the data bus supplying the central processing unit with the interruption vector which is produced by the m(n)-th interruption generating unit as an m(n)-th interruption vector when the response signal is supplied to the m(1)-th to m(N)-th interruption generating units and the m(n)-th interruption generating unit is specified as the particular unit.

5. An interruption circuit as claimed in any of claims 2 to 4 wherein the m-th polling circuit (17) comprises:
an m-th counter (19) for counting up an m-th count repeatedly from 1 to N to supply the m(1)-th to m(N)-th interruption generating units (12) with an m-th selection signal representative of the m-th count; and
an m-th controlling arrangement (22, 23, 24) connected to the scanning circuit (16), the connection arrangement (26), and the m-th counter (19) and being supplied through the connection arrangement with an m(n)-th interruption signal generated by the m(n)-th interruption generating unit so as to suspend count up of the m-th count at a selected number n such that the m-th selection signal indicates the m(n)-th interruption generating unit as the particular specified unit when the m-th polling circuit is specified as the particular polling circuit;
the m-th controlling arrangement supplying the scanning circuit with the m(n)-th interruption signal when the m-th selection signal represents the selected number n.

6. An interruption circuit as claimed in claim 5 wherein :
the m-th polling circuit comprises an m-th clock generator (28) for generating an m-th sequence of polling clock pulses;
the m-th controlling arrangement (22, 23, 29) comprising:
an m-th delivery arrangement (29) connected to the scanning circuit (16) and the connection arrangement (26) for supplying the scanning circuit with an m-th interruption signal generated by any one of the m(l)-th to m(N)-th interruption generating units; and
an m-th controller (22, 23) connected to the m-th counter (19), the m-th clock generator (28), and the m-th delivery arrangement (29) to supply the m-th counter with clock pulses such that the m-th counter counts the clock pulses as the m-th count in the absence of an interruption signal generated by the m(l)-th to m(N)-th interruption generating units, the m-th controller suspending supply of the clock pulses to the m-th counter (19) when the m-th interruption signal is generated, such that with counter connected to the m-th controller produces a m-th selection signal representing the selected number n when an m(n)-th interruption signal is generated.

7. An interruption circuit as claimed in any of claims 2 to 6 wherein the scanning circuit (16) comprises:
a scan counter (34) for counting up a scan count repeatedly from 1 to M to produce a scan count signal representative of the scan count; and
a scan controlling arrangement (31, 37, 38) connected to the first to M-th polling circuits (17) and the scan counter to suspend count up of the scan count at m when supplied with an m-th interruption signal from an m-th polling circuit, where m represents a selected count selected from between 1 and M, both inclusive;
the scan controlling arrangement supplying the central processing unit (11) with the interruption signal received from the m-th polling circuit when the scan count signal represents the selected count m corresponding to the m-th polling circuit supplying the scan controlling arrangement with the m-th interruption signal;
the scan controlling arrangement supplying the scan count signal representative of the selected count m to the first to M-th polling circuits as an address signal for specifying the m-th polling circuit as the particular polling circuit.

8. An interruption circuit as claimed in claim 7, wherein the scan controlling arrangement comprises:
a scan clock generator (33) for generating a sequence of scan clock pulses;
a scan delivery arrangement (31) connected to the first to M-th polling circuits and the scan clock generator to supply the central processing unit (4) with the m-th interruption signal when the scan count signal represents the selected count m; and
a scan controller (37, 38) connected to the scan counter, the scan clock generator, and the scan delivery arrangement to supply the scan counter with the scan clock pulses such that the scan counter counts the scan clock pulses as the scan count in the absence of an interruption signal received from the first to M-th polling circuits, the scan controller suspending supply of the scan clock pulses to the scan counter when the m-th interruption signal is received, such that the scan counter connected to the scan controller produces a scan count signal representing the selected count m when the m-th interruption signal is received by the scan circuit (16) from the m-th polling circuit (17).

9. An interruption circuit as claimed in claim 3 wherein the m-th response control circuit (27) is assigned with an m-th interruption response number and comprises:
an m-th collating circuit (46) connected to the scanning circuit (16) for collating the m-th interruption response number with the selected count m represented by the address signal to produce an m-th coincidence signal when the selected count m is coincident with the m-th interruption response number; and
an m-th supply arrangement (47) connected to the m-th collating circuit (46) between the central processing unit and the m(1)-th to m(N)-th interruption generating units to supply the response signal to the m(l)-th to m(N)-th interruption generating units when the m-th coincidence signal is produced by the collating circuit.

10. An interruption circuit as claimed in claim 3 or 9 wherein the m(n)-th interruption generating unit is assigned with an m(n)-th unit number and comprises:
an m(n)-th collating circuit (51) connected to the m-th controlling arrangement (22, 23, 29) for collating the m(n)-th unit number with the second selected number n represented by the m-th selection signal to produce an m(n)-th coincidence signal when the second selected number n is coincident with the m(n)-th unit number;
an m(n)-th one-bit memory (12) for memorizing the m(n)-th interruption signal;
an m(n)-th controller (55, 56, 57) connected to the m-th controlling arrangement, the m-th supply arrangement (47), the connection arrangement (26), the m(n) -th collating circuit (51), and the m(n)-th one-bit memory (52) such that the m(n)-th one-bit memory supplies the m(n)-th interruption signal to the connection arrangement when an m(n)-th coincidence signal is produced and an m(n)-th interruption signal is memorized in the m(n)-th one-bit memory, the m(n)-th controller resting the m(n)-th one-bit memory when the central processing unit terminates the response signal; and
an m(n)-th buffer (59) connected to the m(n)-th controller for buffering the m(n)-th interruption vector and for supplying the central processing unit with m(n)-th interruption vector when the response signal is supplied to the m(1)-th to m(N)-th interruption generating units and the m(n)-th interruption signal is delivered to the connection arrangement.

## Patentansprüche

1. Unterbrechungsschaltung für den Gebrauch mit einer zentralen Verarbeitungseinheit (11) und mehreren Unterbrechungserzeugungseinheiten (12), wobei jede der Unterbrechungserzeugungseinheiten ein Unterbrechungssignal bei Auftreten einer Unterbrechungsanforderung erzeugt und die Unterbrechungsschaltung aufweist:
eine Abtastanordnung (16, 17) zwischen der zentralen Verarbeitungseinheit und den unterbrechungserzeugungseinheiten zum Abtasten der Unterbrechungserzeugungseinheiten, um eine von den Unterbrechungserzeugungseinheiten pro Zeitpunkt als besondere Einheit zu spezifizieren, und zum Zuführen des von der spezifizierten besonderen Einheit erzeugten Unterbrechungssignals zu der zentralen Verarbeitungseinheit, um die zentrale Verarbeitungseinheit (11) zu veranlassen, ein Antwortsignal zu erzeugen;
wobei die Abtastanordnung (16, 17) eine Adressenregistereinrichtung (19, 34) zum Speichern der Adresse der spezifizierten besonderen Einheit enthält;
eine Antwortzuführungsanordnung (16, 27) zwischen der zentralen Verarbeitungseinheit (11) und den Unterbrechungserzeugungseinheiten (12), um das Antwortsignal der spezifizierten besonderen Einheit zuzuführen;
wobei die Antwortzuführungsanordnung (16, 27) mit der Adressenregistereinrichtung (19, 34) verbunden ist, um die Adresse der spezifizierten besonderen Einheit aufzunehmen, und eine Gattereinrichtung (47, 57) zum Spezifizieren eines Signalpfades von der zentralen Verarbeitungseinheit (11) zu der spezifizierten besonderen Einheit enthält, die Antwortzuführungsanordnung (16, 27) und jede von den Unterbrechungserzeugungseinheiten (12) eine mit der Registereinrichtung (19, 34) der Abtastanordnung und der Gattereinrichtung (47, 57) verbundene Vergleichseinrichtung (46, 51) aufweist, um als ein Ergebnis des Vergleichs mit der in dem Adressenregister (19, 34) gespeicherten Adresse einen Signalpfad von der zentralen Verarbeitungseinheit (11) zu der spezifizierten besonderen Einheit durch Öffnen der Gattereinrichtung (47, 57) zu erzeugen;
wobei die Unterbrechungsschaltung ferner eine Vektorzuführungsanordnung (25, 59) zwischen der zentralen Verarbeitungseinheit und den Unterbrechungserzeugungseinheiten enthält, um die spezifizierte besondere Einheit zu veranlassen, nach dem Empfang des Antwortsignals, der zentralen Verarbeitungseinheit einen Unterbrechungsvektor zuzuführen, welcher für jede von den Unterbrechungserzeugungseinheiten spezifisch ist und die zentrale Verarbeitungseinheit in die Lage versetzt, ihren Betrieb in Bezug auf die spezifizierte besondere Einheit zu unterbrechen.

2. Unterbrechungsschaltung nach Anspruch 1, wobei die Unterbrechungserzeugungseinheiten in M erste bis M-te Gruppen einschließlich einer m-ten Gruppe gruppiert sind, wobei M eine erste Vielzahl, m eine zwischen l und M, beide eingeschlossen, erste selektierte Zahl darstellt, die m-te Gruppe m(1)-te bis m(N)-te Unterbrechungserzeugungseinheiten repräsentiert, N eine zweite Vielzahl repräsentiert, und die Abtastanordnung aufweist:
erste bis M-te Abfrageschaltungen (17) einschließlich einer m-ten Abfrageschaltung, wobei die m-te Abfrageschaltung zum zyklischen Abtasten der m(1)-ten bis m(N)-ten Unterbrechungserzeugungseinheiten dient, um eine m(n)-te Unterbrechungserzeugungseinheit als eine besondere Einheit zu spezifizieren, wobei n eine Zahl darstellt, die zwischen 1 und N, beide eingeschlossen, ausgewählt wird;
eine Verbindungsanordnung (26) zwischen den ersten bis M-ten Abfrageschaltungen (17) bzw. den ersten bis M-ten Gruppen; und
eine Abtastschaltung (16) zwischen der zentralen Verarbeitungseinheit (11) und den ersten bis M-ten Abfageschaltungen (17) zum zyklischen Abtasten der M Abfrageschaltungen (17), um eine der Abfrageschaltungen pro Zeitpunkt als eine besondere Schaltung zu spezifizieren, wobei die identifizierte Einheit die von der m-ten Abfrageeinheit spezifizierte besondere Einheit ist, wenn die m-te Abfrageeinheit die spezifizierte besondere Schaltung ist;
wobei jede von den mehreren Unterbrechungserzeugungseinheiten (12) ein Unterbrechungssignal erzeugt, wenn sie als eine besondere Einheit von einer Abfrageschaltung während der Erzeugung einer Unterbrechungsanforderung spezifiziert wird;
wobei die besondere Abfrageschaltung und die Abtastschaltung der zentralen Verarbeitungseinheit das von der spezifizierten besonderen Einheit erzeugte und der spezifizierten besonderen Abfrageschaltung durch die Verbindungsanordnung (26) zugeführte Signal zuführen.

3. Unterbrechungsschaltung nach Anspruch 2, wobei:
die Antwortzuführungsanordnung (16, 27) jeweils M erste bis M-te Steuerschaltungen (27) zwischen der zentralen Verarbeitungseinheit und den ersten bis M-ten Gruppen aufweist, wobei die ersten bis M-ten Steuerschaltungen 27) eine m-te Steuerschaltung enthalten, die der m-ten Abfrageschaltung entspricht;
das Adressenregister (34) der Abtastschaltung (16), welche die besondere Steuereinheit (16) spezifiziert, der besonderen Abtastschaltung entspricht;
die Gattereinrichtung (47) der m-ten Steuerschaltung das Antwortsignal den m(1)-ten bis m(N)-ten Unterbrechungserzeugungseinheiten zuführt, wenn sie als besondere Steuerschaltungen spezifiziert sind;
die m(n)-te Unterbrechungserzeugungseinheit das Antwortsignal empfängt, wenn sie von der besonderen Abfrageschaltung als die besondere Einheit spezifiziert wird.

4. Unterbrechungsschaltung nach einem der vorstehenden Ansprüche, wobei die Vektorzuführungsanordnung (25, 59) einen Datenbus (25) zwischen der zentralen Verarbeitungseinheit (11) und den mehreren Unterbrechungserzeugungsschaltungen aufweist, der Datenbus der zentralen Verarbeitungseinheit den Unterbrechungsvektor zuführt, welcher von der m(n)-ten Unterbrechungserzeugungseinheit als ein m(n)-ter Unterbrechungsvektor erzeugt wird, wenn das Antwortsignal an die m(l)-ten bis m(N)-ten Unterbrechungserzeugungseinheiten geliefert wird und die m(n)-te Unterbrechungserzeugungseinheit als die besondere Einheit spezifiziert wird.

5. Unterbrechungsschaltung nach einem der Ansprüche 2 bis 4, wobei die m-te Abfrageschaltung (17) aufweist.
einen m-ten Zähler (19) zum wiederholten Hochzählen eines m-ten Zählwertes von l bis N, um die m(1)-ten bis m(N)-ten Unterbrechungserzeugungseinheiten (12) mit einem den m-ten Zählwert darstellenden Selektionssignal zu beliefern; und
eine m-te Steueranordnung (22, 23, 24), die mit der Abtastschaltung (16), der Verbindungsanordnung (26) und dem m-ten Zähler (19) verbunden ist, und über die erste Verbindungsanordnung mit einem von der m(n)-ten Unterbrechungserzeugungseinheit erzeugen m(n)-ten Unterbrechungssignal versorgt wird, um so das Hochzählen des m-ten Zählwertes bei einer selektierten Zahl n in der Weise auszusetzen, daß das m-te Selektionssignal die m(n)-te Unterbrechungserzeugungseinheit als die besondere spezifizierte Einheit angibt, wenn die m-te Abfrageschaltung als die besondere Abfrageschaltung spezifiziert wird;
wobei die m-te Steueranordnung der Abtastschaltung das m(n)-te Unterbrechungssignal zuführt, wenn das m-te Selektionssignal die selektierte Zahl n darstellt.

6. Unterbrechungsschaltung nach Anspruch 5, wobei:
die m-te Abfrageschaltung einen m-ten Taktgenerator (28) zum Erzeugen einer m-ten Ablauffolge von Abfragetaktimpulsen erzeugt;
die m-te Steueranordnung (22, 23, 29) aufweist:
eine m-te Lieferungsanordnung (29), die mit der Abtastschaltung (16) und der Verbindungsanordnung (26) verbunden ist, um der Abtastschaltung ein m-tes Unterbrechungssignal zuzuführen, das von irgendeiner der m(l)-ten bis m(N)-ten Unterbrechungserzeugungseinheiten erzeugt wird; und
eine mit dem m-ten Zähler (19), dem m-ten Taktgenerator (28) und der m-ten Lieferungsanordnung 29 verbundene m-te Steuerung (22, 23), um dem m-ten Zähler Taktimpulse in der Weise zuzuführen, daß der m-te Zähler die Taktimpulse als den m-ten Zählwert in Abwesenheit eines von den m(1)-ten bis m(N)-ten Unterbrechungserzeugungseinheiten erzeugten Unterbrechungssignals zählt, wobei die m-te Steuerung die Zuführung der Taktimpulse an den m-ten Zähler (19) aussetzt, wenn das m-te Unterbrechungssignal in der Weise erzeugt wird, so daß sie, wenn der Zähler mit der m-ten Steuerung verbunden ist, ein m-tes Auswahlsignal erzeugt, daß die selektierte Nummer n darstellt, wenn das m(n)-te Unterbrechungssignal erzeugt wird.

7. Unterbrechungsschaltung nach einem der Ansprüche 2 bis 6, wobei die Abtastschaltung (16) aufweist:
einen Abtastzähler (34) zum wiederholten Hochzählen eines Abtastzählwertes von l bis M, um ein für den Abtastzählwert repräsentatives Abtastzählwertsignal zu erzeugen; und
eine Abtaststeueranordnung (31, 37, 38) die mit den ersten bis M-ten Abfrageschaltungen (17) und dem Abtastzähler verbunden ist, um das Hochzählen des Abtastzählwertes bei m auszusetzen, wenn ihr ein m-tes Unterbrechungssignal aus einer m-ten Abfrageschaltung zugeführt wird, wobei m einen ausgewählten Zählwert zwischen 1 und M, beide eingeschlossen, darstellt;
wobei die Abtaststeuerschaltung der zentralen Verarbeitungseinheit (11) das von der m-ten Abfrageschaltung erhaltene Unterbrechungssignal zuführt, wenn das Abtastzählwertsignal den selektierten Zahlwert m zeigt, der der m-ten Abfrageschaltung entspricht, welche der Abtaststeueranordnung das m-te Unterbrechungssignal zuführt;
wobei die Abtaststeueranordnung das den ausgewählten Zählwert m repräsentierende Abtastzählwertsignal den ersten bis M-ten Abfrageschaltungen als ein Adressensignal zur Spezifizierung der m-ten Abfrageschaltung als die besondere Abfrageschaltung zuführt.

8. Unterbrechungsschaltung nach Anspruch 7, wobei die Abtaststeueranordnung aufweist:
einen Abtasttaktgenerator (33) zum Erzeugen einer Ablauffolge von Abtasttaktimpulsen;
eine Abtastlieferanordnung (31), die mit den ersten bis M-ten Abfrageschaltungen und dem Abtasttaktgenerator verbunden ist, um der zentralen Verarbeitungseinheit (4) das m-te Unterbrechungssignal zuzuführen, wenn der Abtastzählwert den ausgewählten Zählwert m darstellt; und
eine Abtaststeuerung (37, 18), die mit dem Abtastzähler, dem Abtasttaktgenerator und mit der Abtastlieferanordnung (31) verbunden ist, um dem Abtastzähler die Abtasttaktimpulse so zuzuführen, daß der Abtastzähler die Abtasttaktimpulse als den Abtastzählwert in Abwesenheit eines von den ersten bis M-ten Abfrageschaltungen empfangenen Unterbrechungssignals zählt, wobei die Abtaststeuerung die Zuführung der Abtasttaktimpulse an den Abtastzähler aussetzt, wenn das m-te Unterbrechungssignal empfangen wird, so daß der mit der Abtaststeuerung verbundene Abtastzähler ein Abtastzählwertsignal erzeugt, das den selektierten Zählwert m darstellt, wenn das m-te Unterbrechungssignal von der Abtastschaltung (16) aus der m-ten Abfrageschaltung (17) empfangen wird.

9. Unterbrechungsschaltung nach Anspruch 3, wobei der m-ten Antwortsteuerschaltung (27) eine m-te Unterbrechungsantwortnummer zugeordnet ist, und diese aufweist:
eine m-te Vergleichsschaltung (46), die mit der Abtastschaltung (16) verbunden ist, um die m-te Unterbrechungsantwortnummer mit dem von dem Adressensignal dargestellten selektierten Zählwert m zu vergleichen, um ein m-tes Übereinstimmungssignal zu erzeugen, wenn die selektierte Zählwert m mit der m-ten Unterbrechungsantwortnummer übereinstimmt; und
eine m-te Zuführungsanordnung (47), die mit der m-ten Vergleichsschaltung (46) zwischen der zentralen Verarbeitungseinheit und den m(1)-ten bis m(N)-ten Unterbrechungserzeugungseinheiten verbunden ist, um das Antwortsignal m(1) bis m(N)-ten Unterbrechungserzeugungseinheiten zuzuführen, wenn das m-te Übereinstimmungssignal von der Vergleichsschaltung erzeugt wird.

10. Unterbrechungsschaltung nach Anspruch 3 oder 9, wobei der m(n)-ten Unterbrechungserzeugungseinheit eine m(n)-te Einheitennummer zugeordnet ist, und diese aufweist:
eine m(n)-te Vergleichsschaltung (51), die mit der m-ten Steueranordnung (22, 23, 29) verbunden ist, um die m(n)-te Einheitennummer mit der von dem m-ten Selektionssignal dargestellten zweiten selektierten Nummer n zu vergleichen, um ein m(n)-tes Übereinstimmungssignal zu erzeugen, wenn die zweite selektierte Nummer n mit der m(n)-ten Einheitennummer übereinstimmt;
einen m(n)-te Ein-Bit-Speicher (12) zum Speichern des m(n)-ten Unterbrechungssignals;
eine m(n)-te Steuerung (55, 56, 57), die mit der m-ten Steueranordnung, der m-ten Zuführungsanordnung (47), der Verbindungsanordnung (26), der m(n)-ten Vergleichsschaltung (51) und dem m(n)-ten Ein-Bit-Speicher (52) so verbunden ist, daß der m(n)-te Ein-Bit-Speicher das m(n)-te Unterbrechungssignal an die Verbindungsanordnung liefert, wenn ein m(n)-tes Übereinstimmungssignal erzeugt wird und ein m(n)-tes Unterbrechungssignal in dem m(n)-ten Ein-Bit-Speicher gespeichert wird, wobei die m(n)-te Steuerung den m(n)-ten Ein-Bit-Speicher beibehält, wenn die zentrale Verarbeitungseinheit das Antwortsignal beendet; und
einen m(n)-ten Puffer (59), der mit der m(n)-ten Steuerung zur Pufferung des m(n)-ten Unterbrechungsvektors und zur Zuführung des m(n)-ten Unterbrechungsvektors an die zentrale Verarbeitungseinheit verbunden ist, wenn das Antwortsignal den m(1)-ten bis m(N)-ten Unterbrechungserzeugungseinheiten zugeführt wird und das m(n)-te Unterbrechungssignal an die Verbindungsanordnung geliefert wird.

## Revendications

1. Circuit d'interruption destiné à être utilisé en combinaison avec une unité centrale (11) et une multiplicité d'unités génératrices d'interruptions (12), chacune des unités génératrices d'interruptions générant un signal d'interruption à l'occurrence d'une demande d'interruption, le circuit d'interruption comprenant :
un agencement de balayage (16, 17) entre l'unité centrale et les unités génératrices d'interruptions pour balayer les unités génératrices d'interruptions en vue de spécifier une des unités génératrices d'interruptions à la fois comme unité particulière et pour fournir à l'unité centrale le signal d'interruption généré par l'unité particulière spécifiée en vue de faire en sorte que l'unité centrale (11) produise un signal de réponse ;
l'agencement de balayage (16, 17) comportant un moyen de registre d'adresse (19, 34) pour stocker l'adresse de l'unité particulière spécifiée ;
un agencement de fourniture de réponse (16, 27) entre l'unité centrale (11) et les unités génératrices d'interruptions (12) pour fournir le signal de réponse à l'unité particulière spécifiée ;
l'agencement de fourniture de réponse (16, 27) étant couplé au moyen de registre d'adresse (19, 34) en vue de recevoir l'adresse de l'unité particulière spécifiée, et comportant un moyen de porte (47, 57) pour spécifier un chemin de signal depuis l'unité centrale (11) jusqu'à l'unité particulière spécifiée, l'agencement de fourniture de réponse (16, 27) et chacune des unités génératrices d'interruptions (12) comprenant un moyen de collationnement (46, 51) couplé au moyen de registre d'adresse (19, 34) de l'agencement de balayage et au moyen de porte (47, 57) pour créer, à la suite de la comparaison avec l'adresse stockée dans le moyen de registre d'adresse (19, 34), un chemin de signal depuis l'unité centrale (11) jusqu'à l'unité particulière spécifiée en ouvrant ledit moyen de porte (47, 97),
le circuit d'interruption comportant en outre un agencement de fourniture de vecteur (25, 59) entre l'unité centrale et les unités génératrices d'interruptions pour faire en sorte que l'unité particulière spécifiée fournisse, à la réception du signal de réponse, à l'unité centrale un vecteur d'interruption qui est spécifique à chacune des unités génératrices d'interruptions et faire en sorte que l'unité centrale interrompe son opération relative à l'unité particulière spécifiée.

2. Circuit d'interruption selon la revendication 1, lesdites unités génératrices d'interruptions étant groupées dans un M premier à un M^{e} groupes comportant un m^{e} groupe, où M représente un première pluralité, m représente un premier numéro sélectionné entre 1 et M, tous deux inclus, le m^{e} groupe comprenant une m(1)^{e} à une m(N)^{e} unités génératrices d'interruptions, où N représente une deuxième pluralité, où l'agencement de balayage comprend :
un premier à un M^{e} circuits d'interrogation (17), comportant un m^{e} circuit d'interrogation, le m^{e} circuit d'interrogation servant à balayer cycliquement les m(1)^{e} à m(N)^{e} unités génératrices d'interruptions en vue de spécifier une m(n)^{e} unité génératrice d'interruptions comme unité particulière, où n représente un numéro sélectionné entre 1 et N, tous deux inclus ;
un agencement de connexion (26) entre les premier et M^{e} circuits d'interrogation (17) et les premier et M^{e} groupes, respectivement ; et
un circuit de balayage (16) entre ladite unité centrale (11) et les premier à M^{e} circuits d'interrogation (17) pour balayer cycliquement les M circuits d'interrogation (17) en vue de spécifier un des circuits d'interrogation à la fois comme circuit particulier, l'unité identifiée étant l'unité particulière spécifiée par la m^{e} unité d'interrogation quand la m^{e} unité d'interrogation est le circuit particulier spécifié ;
chacune de la pluralité d'unités génératrices d'interruptions (12) produisant un signal d'interruption quand elle est spécifiée en tant qu'unité particulière par un circuit d'interrogation lors de la génération d'une demande d'interruption ;
le circuit d'interrogation particulier et le circuit de balayage fournissant à l'unité centrale le signal d'interruption généré par l'unité particulière spécifiée et fourni au circuit d'interrogation particulier spécifié à travers l'agencement de connexion (26).

3. Circuit d'interruption selon la revendication 2, dans lequel :
l'agencement de fourniture de réponse (16, 27) comprend un M premier à un M^{e} circuits de commande (27) entre l'unité centrale et les premier au M^{e} groupes respectivement, les premier au M^{e} circuits de commande (27) comportant un m^{e} circuit de commande correspondant au m^{e} circuit d'interrogation ;
le registre d'adresse (34) du circuit de balayage (16) spécifiant le circuit de commande particulier (16) correspondant au circuit d'interrogation particulier ;
le moyen de porte (47) du m^{e} circuit de commande fournissant le signal de réponse aux m(1)^{e} à m(N)^{e} unités génératrices d'interruptions quand il est spécifié comme circuit de commande particulier ;
la m(n)^{e} unité génératrice d'interruptions recevant le signal de réponse quand elle est spécifiée par le circuit d'interrogation particulier comme unité particulière.

4. Circuit d'interruption selon l'une quelconque des revendications précédentes, dans lequel l'agencement de fourniture de vecteur (25, 59) comprend un bus de données (25) entre l'unité centrale (11) et la multiplicité d'unités génératrices d'interruptions, le bus de données fournissant à l'unité centrale le vecteur d'interruption qui est produit par la m(n)^{e} unité génératrice d'interruptions comme m(n)^{e} vecteur d'interruption quand le signal de réponse est fourni aux m(1)^{e} à m(N)^{e} unités génératrices d'interruptions et la m(n)^{e} unité génératrice d'interruptions est spécifiée comme unité particulière.

5. Circuit d'interruption selon l'une quelconque des revendications 2 à 4, dans lequel le m^{e} circuit d'interrogation (17) comprend :
un m^{e} compteur (19) pour compter jusqu'à un m^{e} compte de manière répétée de 1 à N en vue de fournir aux m(1)^{e} à m(N)^{e} unités génératrices d'interruptions (12) un m^{e} signal de sélection représentatif du m^{e} compte ; et
un m^{e} agencement de commande (22, 23, 24) connecté au circuit de balayage (16), à l'agencement de connexion (26) et au m^{e} compteur (19) et recevant par l'intermédiaire de l'agencement de connexion un m(n)^{e} signal d'interruption généré par la m(n)^{e} unité génératrice d'interruptions de manière à arrêter le compte du m^{e} compte à un numéro sélectionné n de telle sorte que le m^{e} signal de sélection indique la m(n)^{e} unité génératrice d'interruptions comme unité spécifiée particulière quand le m^{e} circuit d'interrogation est spécifié comme circuit d'interrogation particulier ;
le m^{e} agencement de commande fournissant au circuit de balayage le m(n)^{e} signal d'interruption quand le m^{e} signal de sélection représente le numéro sélectionné n.

6. Circuit d'interruption selon la revendication 5, dans lequel :
le m^{e} circuit d'interrogation comprend un m^{e} générateur d'horloge (28) pour générer une m^{e} séquence d'impulsions d'horloge d'interrogation ;
le m^{e} agencement de commande (22, 23, 24) comprenant :
un m^{e} agencement de livraison (29) connecté au circuit de balayage (16) et à l'agencement de connexion (26) pour fournir au circuit de balayage un m^{e} signal d'interruption généré par n'importe laquelle des m(1)^{e} à m(N)^{e} unités génératrices d'interruptions ; et
un m^{e} contrôleur (22, 23) connecté au m^{e} compteur (19), au m^{e} générateur d'horloge (28), et au m^{e} agencement de livraison (29) en vue de fournir au m^{e} compteur des impulsions d'horloge de telle sorte que le m^{e} compteur compte les impulsions d'horloge comme le m^{e} compte en l'absence de signal d'interruption généré par les m(1)^{e} à m(N)^{e} unités génératrices d'interruptions, le m^{e} contrôleur arrêtant la fourniture des impulsions d'horloge au m^{e} compteur (19) quand le m^{e} signal d'interruption est généré, de telle sorte que le compteur connecté au m^{e} contrôleur produise un m^{e} signal de sélection représentant le numéro sélectionné n quand un m(n)^{e} signal d'interruption est généré.

7. Circuit d'interruption selon l'une quelconque des revendications 2 à 6, dans lequel le circuit de balayage (16) comprend :
un compteur de balayage (34) pour compter un compte de balayage de manière répétée de 1 à M en vue de produire un signal de compte de balayage représentatif du compte de balayage ; et
un agencement de commande de balayage (31, 37, 38) connecté aux premier à M^{e} circuits d'interrogation (17) et au compteur de balayage en vue d'arrêter le compte du compte de balayage à m quand il reçoit un m^{e} signal d'interruption d'un m^{e} circuit d'interrogation, où m représente un compte sélectionné entre 1 et M, tous deux inclus ;
l'agencement de commande de balayage fournissant à l'unité centrale (11) un signal d'interruption reçu du m^{e} circuit d'interrogation quand le signal de compte de balayage représente le compte sélectionné m correspondant au m^{e} circuit d'interrogation fournissant à l'agencement de commande de balayage le m^{e} signal d'interruption ;
l'agencement de commande de balayage fournissant le signal de compte de balayage représentatif du compte sélectionné m aux premier à M^{e} circuits d'interrogation comme signal d'adresse pour spécifier le m^{e} circuit d'interrogation comme circuit d'interrogation particulier.

8. Circuit d'interruption selon la revendication 7, dans lequel l'agencement de commande de balayage comprend :
un générateur d'horloge de balayage (33) pour générer une séquence d'impulsions d'horloge de balayage ;
un agencement de livraison de balayage (31) connecté aux premier à M^{e} circuits d'interrogation et au générateur d'horloge de balayage en vue de fournir à l'unité centrale (4) le m^{e} signal d'interruption quand le signal de compte de balayage représente le compte sélectionné m ; et
un contrôleur de balayage (37, 38) connecté au compteur de balayage, au générateur d'horloge de balayage et à l'agencement de livraison de balayage en vue de fournir au compteur de balayage des impulsions d'horloge de balayage de telle sorte que le compteur de balayage compte les impulsions d'horloge de balayage comme compte de balayage en l'absence d'un signal d'interruption reçu des premier au M^{e} circuits d'interrogation, le contrôleur de balayage arrêtant la fourniture des impulsions d'horloge de balayage au compteur de balayage quand le m^{e} signal d'interruption est reçu, de telle sorte que le compteur de balayage connecté au contrôleur de balayage produise un signal de compte de balayage représentant le compte sélectionné m quand le m^{e} signal d'interruption est reçu par le circuit de balayage (16) à partir du m^{e} circuit d'interrogation (17).

9. Circuit d'interruption selon la revendication 3, dans lequel le m^{e} circuit de commande de réponse (27) reçoit un m^{e} numéro de réponse d'interruption et comprend :
un m^{e} circuit de collationnement (46) connecté au circuit de balayage (16) pour collationner le m^{e} numéro de réponse d'interruption avec le compte sélectionné m représenté par le signal d'adresse en vue de produire un m^{e} signal de coïncidence quand le compte sélectionné m coïncide avec le m^{e} numéro de réponse d'interruption ; et
un m^{e} agencement de fourniture (47) connecté au m^{e} circuit de collationnement (46) entre l'unité centrale et les m(1)^{e} à m(N)^{e} unités génératrices d'interruptions en vue de fournir le signal de réponse aux m(1)^{e} à m(N)^{e} unités génératrices d'interruptions quand le m^{e} signal de coïncidence est produit par le circuit de collationnement.

10. Circuit d'interruption selon la revendication 3 ou 9, dans lequel la m(n)^{e} unité génératrice d'interruptions reçoit un m(n)^{e} numéro d'unité et comprend :
un m(n)^{e} circuit de collationnement (51) connecté au m^{e} agencement de commande (22, 23, 24) pour collationner le m(n)^{e} numéro d'unité avec le deuxième numéro sélectionné n représenté par le m^{e} signal de sélection en vue de produire un m(n)^{e} signal de coïncidence quand le deuxième numéro sélectionné n coïncide avec le m(n)^{e} numéro d'unité ;
une m(n)^{e} mémoire un bit (12) pour mémoriser le m(n)^{e} signal d'interruption ;
un m(n)^{e} contrôleur (55, 56, 57) connecté au m^{e} agencement de commande, au m^{e} agencement de fourniture (47), à l'agencement de connexion (26), au m(n)^{e} circuit de collationnement (51), et à la m(n)^{e} mémoire un bit (52) de telle sorte que la m(n)^{e} mémoire un bit fournisse le m(n)^{e} signal d'interruption à l'agencement de connexion quand un m(n)^{e} signal de coïncidence est produit et un m(n)^{e} signal d'interruption est mémorisé dans la m(n)^{e} mémoire un bit, le m(n)^{e} contrôleur pausant la m(n)^{e} mémoire un bit quand l'unité centrale met fin au signal de réponse ; et
un m(n)^{e} tampon (59) connecté au m(n)^{e} contrôleur pour tamponner le m(n)^{e} vecteur d'interruption et pour fournir à l'unité centrale le m(n)^{e} vecteur d'interruption quand le signal de réponse est fourni aux m(1)^{e} à m(N)^{e} unités génératrices d'interruptions et le m(n)^{e} signal d'interruption est fourni à l'agencement de connexion.
